Europäisches Patentamt

European Patent Office

Office européen des brevets

(11) Veröffentlichungsnummer: **0 175 994**
B1

# (12) EUROPÄISCHE PATENTSCHRIFT

(45) Veröffentlichungstag der Patentschrift:
25.04.90

(51) Int. Cl.⁴: **H04B 10/00**

(21) Anmeldenummer: **85111383.7**

(22) Anmeldetag: **09.09.85**

(54) **Sende- und Empfangsverfahren für Relais-Stationen.**

(30) Priorität: **21.09.84 DE 3434742**

(43) Veröffentlichungstag der Anmeldung:
**02.04.86 Patentblatt 86/14**

(45) Bekanntmachung des Hinweises auf die Patenterteilung:
**25.04.90 Patentblatt 90/17**

(84) Benannte Vertragsstaaten:
**AT CH DE LI SE**

(56) Entgegenhaltungen:
EP-A- 0 013 316
EP-A- 0 028 188
DE-A- 3 244 712
DE-U- 8 226 651
US-A- 3 696 421
US-A- 4 090 067

(73) Patentinhaber: **Siemens Aktiengesellschaft,
Wittelsbacherplatz 2, D-8000 München 2(DE)**

(72) Erfinder: **Wimmer, Gerhard, Lindenstrasse 25,
D-8411 Waldetzenberg(DE)**

## Beschreibung

Die Erfindung betrifft Sende- und Empfangsverfahren für im Raum zwischen einer Sendeanlage und einer Empfangsanlage angeordnete Relais mit jeweils einem Sensor und einem Sender, die zeitlich getrennt aktiviert werden, wobei auf eine Empfangszeitspanne eine Sendezeitspanne folgt und wobei mit zwei oder mehr Relais gearbeitet wird.

Relais für ein derartiges Sende- und Empfangsverfahren sind bekannt (DE-U 82 26 651.4). Diese Relais sind entwickelt worden, um Infrarot-Fernsteuersignale, die von einem Sender ausgehen, über größere Entfernungen und um räumliche Ecken einem Empfänger zuzuführen. Die bekannten Relais weisen einen Sensor und einen Sender auf, die zeitlich getrennt aktiviert werden. Wenn ein Signal am Sensor ankommt, wird zunächst der Sender für eine feste Zeitspanne aktiviert. Darauf folgt eine kurze Zeitspanne, in der der Sensor aktiviert ist. Wenn dieser ein Signal empfängt, wird anschließend der Sender dieses Relais für eine weitere feste Zeitspanne aktiviert, auf die dann wieder eine kurze Aktivierungszeit des Sensors folgt. Wenn kein ankommendes Signal mehr registriert wird, bleibt das Relais auf Empfang, d.h. der Sensor ist aktiviert bis ein weiteres Signal registriert wird.

Dieses bekannte Verfahren, das Empfangszeitspanne und Sendezeitspanne eines Relais voneinander trennt, verhindert eine Rückkopplung, solange nur ein Relais verwendet wird. Ein vom Sender des einzigen Relais abgestrahltes Signal kann dabei den Sensor des Relais nicht erreichen.

Wenn jedoch zur Übermittlung eines Signals zwei oder noch mehr Relaisstationen hintereinander angeordnet werden müssen, beeinflussen sie sich gegenseitig. Da Signale als Kugelwellen abgestrahlt werden, erreicht das vom zweiten Relais abgestrahlte Signal neben dem Empfänger auch den Sensor des ersten Relais, der die Herkunft des Signals nicht erkennen kann. Sonach wird der Sender des ersten Relais erneut aktiviert, wodurch ein fortwährendes Senden der Relais einsetzt. Eine Übertragung von Signalen über die Relaisstrecke ist dann nicht mehr möglich.

Der Erfindung liegt die Aufgabe zugrunde, Sende- und Empfangsverfahren für Relais zu entwickeln, die eine Blockade der Relais bzw. der Übertragungsstrecke infolge Rückkopplung auch dann verhindern, wenn zwischen Sender und Empfänger eine Reihe aus mehr als einer Relaisstation angeordnet ist.

Diese Aufgabe wird erfindungsgemäß nach Anspruch 1 dadurch gelöst, daß nach Sendezeitspannen, in denen dasselbe Signal der Sendeanlage übermittelt wird, die Relais jeweils für eine feste Pausenzeitspanne ausgeschaltet werden, die so bemessen ist, daß für einen Zeitraum alle Relais gleichzeitig ausgeschaltet sind.

Mit dem erfindungsgemäßen Sende- und Empfangsverfahren für Relais wird der Sensor eines Relais in der Übertragungsreihe erst nach einer Pause dann wieder aktiviert, wenn von einem Sender eines nachgeschalteten Relais ein Signal nicht mehr ausgeht. Dadurch ist sichergestellt, daß sich der Übertragungsweg nicht umkehren kann.

Wenn ein Relais nach Anspruch 2 netzsynchron arbeitet und weitere Relais hierauf bezogen und festgelegt werden, können mehr als zwei Relais betrieben werden.

Nach einer ersten unabhängigen Weiterbildung nach Anspruch 3 arbeiten die Relais netzsynchron. Die Empfangsdauer, die Sendedauer, wie auch die Länge der Pausen wird durch die Netzfrequenz festgelegt. Sonach kann die Übertragung nicht asynchron werden und Zeitpunkt sowie Dauer der vorgesehenen Pausen bleiben gewährleistet.

Nach dieser Weiterbildung sind die Empfangszeitspannen eines Relais gegenüber den Empfangszeitspannen des vorgeschalteten Relais um die Ansprechzeit des Sensors verlängert. Die Sendezeitspannen werden dann entsprechend verkürzt, da die Empfangszeitspannen netzsynchron in allen Relais gleichzeitig beginnen. Die Verlängerung der Empfangszeitspannen ermöglichen es erst, daß Signale eines Relais von einem nachgeschalteten Relais zu empfangen sind. Wären nämlich Empfangszeitspanne und Sendezeitspanne aller Stationen synchron, dann wäre der Sensor eines Relais gerade dann aktiviert, wenn im vorgeschalteten Relais ebenfalls der Sensor aktiviert ist und somit kein zu empfangendes Signal abgestrahlt werden könnte.

Nach einer Ausgestaltung der Erfindung ist nach Anspruch 4 vorgesehen, daß die Sender der Relais während des ersten Abschnitts einer Sendezeitspanne mit erhöhter Sendeleistung arbeiten. Die Sensoren der Relais reagieren nämlich auf die mittlere empfangene Energie. Um nun die Reduzierung der mittleren Energie eines Signals, die durch die eingefügten Pausen verursacht ist, zu kompensieren, wird die Sendeleistung zeitweise erhöht. Dadurch wird die Reichweite der einzelnen Relaisstationen vergrößert und man kommt mit weniger Relaisstationen aus.

Um die gleiche Wirkung zu erzielen, kann nach einer anderen Ausgestaltung nach Anspruch 5 die Empfindlichkeit der Sensoren in den Relais dann erhöht werden, nachdem ein Signal registriert wurde. Danach wird die Empfindlichkeit des Sensors dann wieder auf ihr früheres Maß reduziert, nachdem ein Signal nicht mehr registriert wird, um so die Relais auf Störsignale nicht ansprechen zu lassen.

Nach einer zweiten unabhängigen Weiterbildung der Erfindung nach Anspruch 6 ist zur Fernsteuerung eines Schalters über mehr als zwei Relaisstationen eine andere Folge von Empfangszeitspannen und Sendezeitspannen vorgesehen: Der Sender eines Relais wird nun für eine feste Zeitspanne aktiviert, wenn am Sensor ein Signal eintrifft. Im Anschluß daran wird erneut der Sensor aktiviert, der dann das Ende des eintreffenden Signals registriert. Erst danach beginnt eine feste Pausenzeitspanne. Diese dauert so lange, bis die Sensoren aller anderen Relais das Ende des eintreffenden Signals registriert haben. Nach Ablauf der Pausenzeitspanne ist der Sensor für ein neues Signal aktiviert. Eine Rückkopplung kann hierbei nicht auftreten.

Mit der konstanten Sendezeitspanne gemäß dieser Weiterbildung erzielt man den Vorteil, daß unbegrenzt viele Relais hintereinander angeordnet werden können. Ein derartiges Sende- und Empfangsverfahren kann aber nur für die Fernsteuerung eines Schalters Verwendung finden, da bei einem Dimmer durch die Längen der Pausenzeitspannen festgelegt wird, ob Schalten oder Dimmen erfolgen soll. Bei einer Fernsteuerung über mehr als zwei Relais werden die Pausenzeitspannen aber bereits so groß, daß ein Dimmer darin ein Schaltsignal erkennen würde.

Mit dem Verfahren nach der Erfindung wird insbesondere der Vorteil erzielt, daß bei einer drahtlosen Fernübertragung mehrere Relaisstationen eingefügt und gleichzeitig betrieben werden können. Dadurch wird die überbrückbare Distanz um ein Vielfaches größer. Außerdem ist eine Übertragung über mehrere räumliche Ecken möglich.

Die Erfindung soll anhand von in der Zeichnung grob schematisch wiedergegebenen Ausführungsbeispielen näher erläutert werden:

Fig. 1 zeigt den Aufbau eines Fernsteuersystems mit einer Sendeanlage, zwei Relais und einer Empfangsanlage.

Fig. 2 veranschaulicht den zeitlichen Wechsel von Empfangszeitspanne, Sendezeitspanne und Pausenzeitspanne für die Relais des Fernsteuersystems, bei Anschluß an verschiedene Außen- bzw. Phasenleiter.

Fig. 3 veranschaulicht die netzsynchrone Aktivierung der Relais nach einer ersten unabhängigen Weiterbildung bei verlängerten Empfangszeitspannen, bei Betrieb am selben Außenleiter.

Fig. 4 zeigt die Aktivierung eines Relais, das in der Anfangsphase mit erhöhter Sendeleistung und ohne Unterbrechung für Empfangszeitspannen arbeitet.

Fig. 5 zeigt den zeitlichen Wechsel von Empfangszeitspanne, Sendezeitspanne und Pausenzeitspanne eines Relais nach einer zweiten unabhängigen Weiterbildung.

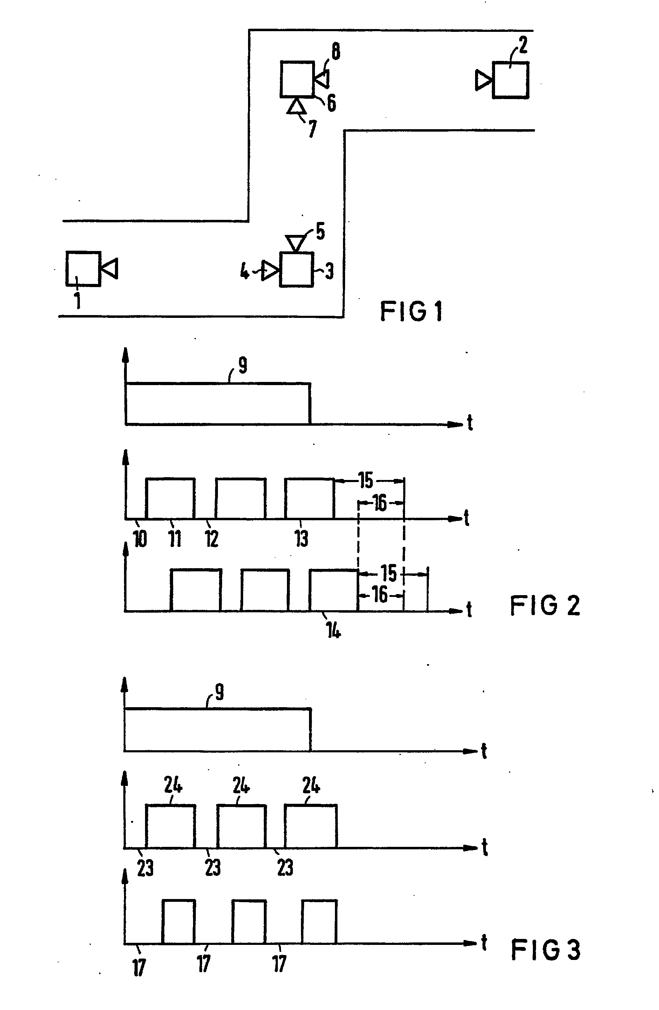

Ein Fernsteuersystem nach Fig. 1 übermittelt Infrarot-Signale von einer Sendeanlage 1 zu einer Empfangsanlage 2. Dazwischen ist ein erstes Relais 3 mit einem Sensor 4 und einem Sender 5 sowie ein zweites Relais 6 mit einem Sensor 7 und einem Sender 8 angeordnet.

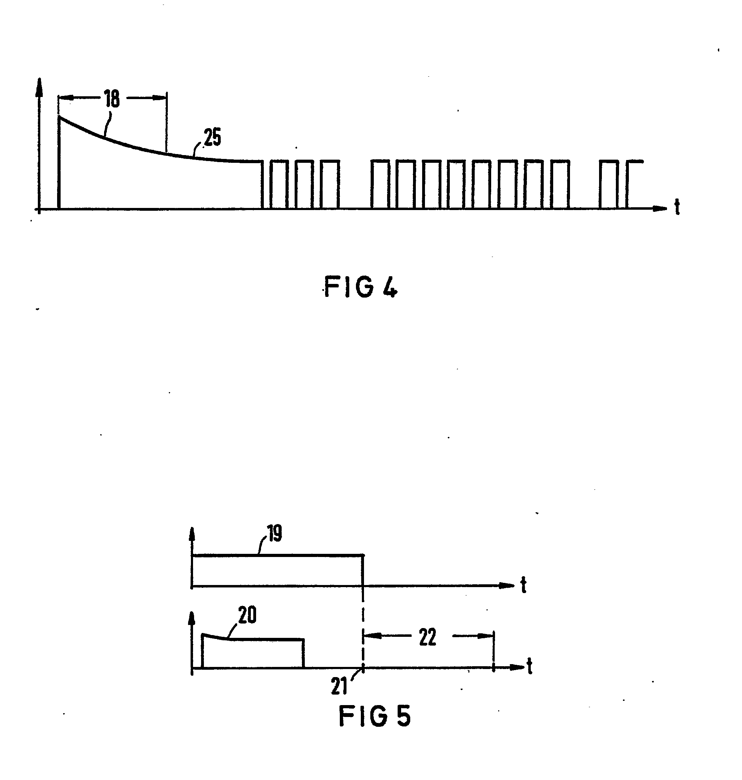

Wenn die Sendeanlage 1 ein zeitlich begrenztes Signal 9 nach Fig. 2 abstrahlt, ist im ersten Relais 3 zunächst der Sensor 4 für eine feste Empfangszeitspanne 10 aktiviert. Danach wird für eine feste Sendezeitspanne 11 der Sender 5 aktiviert, worauf erneut eine Empfangszeitspanne 12 folgt. Danach wird weiterhin abwechselnd Sensor 4 und Sender 5 aktiviert, bis kein Signal 9 mehr empfangen werden kann.

Sensor 7 und Sender 8 des zweiten Relais 6 werden ebenso abwechselnd aktiviert. Zwischen beiden Relais kann es zwar innerhalb eines Gesamtsignals zu Rückkopplung kommen, jedoch nicht zu einer Blockade der Übertragungsstrecke bzw. Relais.

Um zu verhindern, daß ein vom Sender 8 am zweiten Relais 6 abgestrahltes Signal den Sensor 4 am ersten Relais 3 fortwährend erreichen kann, werden die Relais 3 und 6 im Anschluß an Sendezeitspannen 13 und 14 nach Fig. 2, die das Ende desselben Signals 9 übermitteln, für feste Pausenzeitspannen 15 ausgeschaltet. Diese Pausenzeitspannen 15 sind so bemessen, daß während eines festen Zeitraumes 16 beide Relais 3 und 6 ausgeschaltet sind und sonach eine Rückkopplung nicht erfolgen kann. Erst nach Verstreichen der Pausenzeitspanne 15 kann am ersten Relais 3 ein neues Signal von der Sendeanlage 1 empfangen werden.

Bei einer ersten unabhängigen Weiterbildung beginnen die Empfangszeitspannen 23 und 17 der Relais 3 und 6 nach Fig. 3 netzsynchron gesteuert gleichzeitig. Die Empfangszeitspanne 17 des zweiten Relais 6 endet jedoch erst, wenn unter Berücksichtigung der Ansprechzeit des Sensors 7 ein Signal 24 des ersten Relais 3 am zweiten Relais 6 empfangen werden kann. Die Empfangszeitspannen werden also von einem Relais zu einem nachgeschalteten Relais jeweils länger und die Sendezeitspannen entsprechend kürzer.

Damit die Reichweiten der Relais 3 und 6 nicht verkleinert werden, läßt man die Sender 5 und 8 während des ersten Abschnittes 18 einer Sendezeitspanne 25 nach Fig. 4 mit erhöhter Sendeleistung arbeiten. Darüber hinaus werden für die feste Zeitspanne 25 von ungefähr 160 ms keine Empfangszeitspannen eingeblendet.

Wenn ein Dimmer mit dem Infrarot-Fernsteuersystem angesteuert werden soll, dient die Länge von Pausen im von der Sendeanlage 1 abgestrahlten Signal 9 als Information für den Dimmer, ob Schalten erfolgen soll. Soll jedoch nur ein Schalter ferngesteuert werden, dann ist die Länge der Pausen ohne Bedeutung.

Sonach kann ein modifiziertes Verfahren gemäß einer zweiten unabhängigen Weiterbildung nach Fig. 5 zur Weiterleitung von Signalen an einen Schalter angewendet werden, das bei langen Pausen den Einsatz einer unbegrenzten Anzahl von Relais 3, 6 erlaubt.

Wenn am Sensor 4 des ersten Relais 3 ein Signal 19 empfangen wird, wird sein Sender 5 für nur eine einzige feste Zeitspanne 20 aktiviert. Danach schaltet das erste Relais 3 sofort wieder auf Empfang und registriert dann das Ende des eintreffenden Signales 19. Von diesem Zeitpunkt 21 an wird das erste Relais 3 für eine feste Pausenzeitspanne 22 ausgeschaltet, die so gewählt ist, daß während dieser Zeit auch die Sensoren von allen nachgeschalteten Relais das Signal 19 der Sendeanlage 1 registrieren können. Erst nach Ablauf der Pausenzeitspanne 22 kann der Sensor 4 des ersten Relais 3 erneut für ein Signal der Sendeanlage 1 aktiviert werden.

Das Sende- und Empfangsverfahren nach der Erfindung für Relais eines Infrarot-Fernsteuersystems verhindert eine störende Rückkopplung zwischen den Relais 3 und 6, was zu einem Dauerbetrieb dieser Relais 3 und 6 führen würde.

## Patentansprüche

1. Sende- und Empfangsverfahren für im Raum zwischen einer Sendeanlage (1) und einer Empfangsanlage (2) angeordnete Relais (3, 6) mit jeweils einem Sensor (4, 7) und einem Sender (5, 8), die zeitlich getrennt aktiviert werden, wobei auf eine Empfangszeitspanne (10, 12) eine Sendezeitspanne (11, 13, 14) folgt, und wobei mit zwei oder mehr Relais gearbeitet wird, dadurch gekennzeichnet, daß nach Sendezeitspannen (11, 13, 14), in denen dasselbe Signal (9) der Sendeanlage (1) übermittelt wird, die Relais (3, 6) jeweils für eine feste Pausenzeitspanne (15) ausgeschaltet werden, die so bemessen ist, daß für einen Zeitraum (16) alle Relais (3, 6) gleichzeitig ausgeschaltet sind.

2. Sende- und Empfangsverfahren nach Anspruch 1, dadurch gekennzeichnet, daß ein Relais (3) netzsynchron arbeitet und die Längen von Empfangszeitspanne (10, 12), Sendezeitspanne (11, 13) und Pausenzeitspanne (15) durch die Netzfrequenz festlegt.

3. Sende- und Empfangsverfahren für im Raum zwischen einer Sendeanlage (1) und einer Empfangsanlage (2) angeordnete Relais (3, 6) mit jeweils einem Sensor (4, 7) und einem Sender (5, 8), die zeitlich getrennt aktiviert werden, wobei auf eine Empfangszeitspanne (17, 23) eine Sendezeitspanne (24) folgt, und wobei mit zwei oder mehr Relais gearbeitet wird, dadurch gekennzeichnet, daß alle Relais netzsynchron arbeiten und daß die Empfangszeitspannen (17) eines Relais (6) gegenüber den Empfangszeitspannen (23) des vorgeschalteten Relais (3) um die Ansprechzeit des Sensors (7) verlängert sind, wodurch ein Sender (5, 8) erst wieder aktiviert wird, wenn ein Signal (24) am Sensor (7) empfangen wird.

4. Sende- und Empfangsverfahren nach Anspruch 1 oder 3, dadurch gekennzeichnet, daß die Sender (5, 8) der Relais (3, 6) während des ersten Teils (18) einer Sendezeitspanne (25) mit erhöhter Sendeleistung und ohne Unterbrechung für Empfangszeitspannen arbeiten.

5. Sende- und Empfangsverfahren nach Anspruch 1 oder 3, dadurch gekennzeichnet,
– daß die Empfindlichkeit des Sensors (4, 7) für die nachfolgenden Empfangszeitspannen erhöht wird, nachdem am Sensor (4, 7) eines Relais (3, 6) ein Signal registriert wurde und
– daß die Empfindlichkeit des Sensors (4, 7) wieder reduziert wird, nachdem am Sensor (4, 7) ein Signal nicht mehr registriert wird.

6. Sende- und Empfangsverfahren für im Raum zwischen einer Sendeanlage (1) und einer Empfangsanlage (2) angeordnete Relais (3, 6) mit jeweils einem Sensor (4, 7) und einem Sender (5, 8), die zeitlich getrennt aktiviert werden, wobei auf eine Empfangszeitspanne (21) eine Sendezeitspanne (20) folgt, wobei mit zwei oder mehr Relais gearbeitet wird, dadurch gekennzeichnet,
– daß der Sender (5, 8) eines Relais (3, 6) für nur eine feste Zeitspanne (20) aktiviert wird, wenn am Sensor (4, 7) ein Signal (19) empfangen wird,
– daß nach der Sendezeitspanne (20) der Sensor (4, 7) aktiviert wird, der das Ende des eintreffenden Signals (19) registriert,
– daß nach dem Ende des eintreffenden Signals (19) das Relais (3, 6) für eine feste Pausenzeitspanne (22) so lange ausgeschaltet wird, bis alle Relais (3, 6) mit ihren Sensoren (4, 7) das Ende eines entsprechenden Signals registriert haben und
– daß nach Ablauf der Pausenzeitspanne (22) der Sensor (4, 7) für ein neues Signal (19) aktivierbar ist.

## Claims

1. A method of transmitting and receiving for relays (3, 6) arranged in the space between a transmitting system (1) and a receiving system (2), with a respective sensor (4, 7) and a transmitter (5, 8), which are activated separately in terms of time, wherein a transmitting time span (11, 13, 14) follows a receiving time span (10, 12) and wherein the operation is carried out with two or more relays, characterised in that after transmitting time spans (11, 13, 14), in which the same signal (9) is transmitted from the transmitter system (1), the relays (3, 6) are disconnected in each case for a fixed rest interval (15), which is measured so that all relays (3, 6) are simultaneously disconnected for one period (16).

2. A method of transmitting and receiving according to claim 1, characterised in that a relay (3) functions in a synchronous manner and determines the lengths of the receiving time span (10, 12), transmitting time span (11, 13) and the rest interval (15) through the system frequency (11, 13).

3. A method of transmitting and receiving for relays (3, 6) arranged between a transmitting system (1) and a receiving system (2), with a respective sensor (4, 7) and a transmitter (5, 8), which are activated separately in terms of time, wherein a transmitting time span (24) follows a receiving time span (17, 23) and wherein the operation is carried out with two or more relays, characterised in that all relays function in a synchronous manner and in that the receiving time spans (17) of a relay are lengthened, relative to the receiving time spans (23) of the previously connected relay (3), by the operating time of the sensor (7), whereby a transmitter (5, 8) is firstly activated again if a signal (24) is received at the sensor (7).

4. A method of transmitting and receiving according to claim 1 or 3, characterised in that the transmitters (5, 8) of the relays (3, 6) function during the first part (18) of a transmitting time span (25) with increased transmitting performance without interrupting the receiving time spans.

5. A method of transmitting and receiving according to claim 1 or 3, characterised in that
– the sensitivity of the transmitter (4, 7) for the subsequent receiving time spans is increased, once a signal is registered at the sensor (4, 7) of a relay (3, 6) and
– in that the sensitivity of the sensor (4, 7) is reduced again once a signal is no longer registered at the sensor (4, 7).

6. A method of transmitting and receiving for relays (3, 6) arranged in the space between a transmitting system (1) and a receiving system (2) with a respective sensor (4, 7) and a transmitter (5, 8), which are activated separately in terms of time, wherein a transmitting time span (20) follows a receiving time span (21), wherein the operation is carried out with two or more relays, characterised in that

— the transmitter (5, 8) of a relay (3, 6) is activated for only one fixed time span (2), if a signal (19) is received at the sensor (4, 7),

— in that after the transmitting time span (20) the sensor (4, 7) is activated, which registers the end of the signal (19) being received,

— in that after the end of the signal (19) being received the relay (3, 6) is disconnected for a fixed rest interval (22) until all relays (3, 6) with their sensors (4, 7) have registered the end of the corresponding signal

— and in that once the rest interval (22) has elapsed the sensor (4, 7) is able to be activated for a new signal (19).

## Revendications

1. Procédé d'émission et de réception pour des relais (3, 6), disposés dans l'espace entre une installation d'émission (1) et une installation de réception (2), et comportant chacun un capteur (4, 7) et un émetteur (5, 8), qui sont activés séparément dans le temps, selon lequel un intervalle de temps d'émission (11, 13, 14) succède à un intervalle de temps de réception (10, 12) et selon lequel on opère avec deux ou avec un plus grand nombre de relais, caractérisé par le fait qu'après des intervalles de temps d'émission (11, 13, 14), dans lesquels le même signal (9) de l'installation d'émission (1) est retransmis, les relais (3, 6) sont arrêtés respectivement pendant un intervalle de temps de pause fixe (15) qui est dimensionné de telle sorte que, pour un intervalle de temps (16), tous les relais (3, 6) sont simultanément débranchés.

2. Procédé d'émission et de réception suivant la revendication 1, caractérisé par le fait qu'un relais (3) opère d'une manière synchrone avec le réseau et que les durées de l'intervalle de temps de réception (10, 12), de l'intervalle de temps d'émission (11, 13) et de l'intervalle de temps de pause (15), sont fixées par la fréquence du réseau.

3. Procédé d'émission et de réception pour des relais (3, 6), disposés dans l'espace entre une installation d'émission (1) et une installation de réception (2) et comportant chacun un capteur (4, 7) et un émetteur (5, 8), qui sont activés séparément dans le temps, et selon lequel un intervalle de temps d'émission (24) succède à un intervalle de temps de réception (17, 23) et selon lequel on opère avec deux ou un plus grand nombre de relais, caractérisé par le fait que tous les relais fonctionnent en synchronisme avec le réseau et que les intervalles de réception (17) d'un relais (6) sont prolongés, par rapport aux intervalles de temps de réception (23) du relais (3) branché en amont, de l'intervalle de temps de réponse du capteur (7), ce qui permet d'activer à nouveau un émetteur (5, 8) uniquement lorsqu'un signal (24) est reçu dans le capteur (7).

4. Procédé d'émission et de réception suivant la revendication 1 ou 3, caractérisé par le fait que les émetteurs (5, 8) des relais (3, 6) opèrent pendant la première partie (18) d'un intervalle de temps d'émission (25) avec une puissance d'émission accrue et sans interruption, pour des intervalles de temps de réception.

5. Procédé d'émission et de réception suivant la revendication 1 ou 3, caractérisé par le fait

— que la sensibilité du capteur (4, 7) est accrue pour les intervalles de temps de réception suivants, une fois qu'un signal a été enregistré dans le capteur (4, 7) d'un relais (3, 6), et

— que la sensibilité du capteur (3, 7) est à nouveau réduite une fois qu'un signal n'est plus enregistré dans le capteur (4, 7).

6. Procédé d'émission et de réception pour des relais (3, 6), disposés dans l'espace entre une installation d'émission (1) et une installation de réception (2) et comportant chacun un capteur (4, 7) et un émetteur (5, 8) qui sont activés séparément dans le temps, et selon lequel un intervalle de temps d'émission (20) succède à un intervalle de temps de réception (21) et selon lequel on opère avec deux ou avec un plus grand nombre de relais, caractérisé par le fait

— que l'émetteur (5, 8) d'un relais (3, 6) est activé uniquement pendant un intervalle de temps fixe (1), lorsqu'un signal (19) est reçu par le capteur (4, 7),

— qu'après l'intervalle de temps d'émission (20), le capteur (4, 7), qui enregistre la fin du signal (19) arrivant, est activé,

— qu'après la fin du signal arrivant (19), le relais (3, 6) est débranché pendant un intervalle de temps de pause fixe (22) jusqu'à ce que tous les relais (3, 6) aient enregistré, au moyen de leurs capteurs (4, 7), la fin d'un signal correspondant, et

— qu'après l'écoulement de l'intervalle de temps de pause (22), le capteur (4, 7) peut être activé pour un nouveau signal (19).

FIG 1

FIG 2

FIG 3

FIG 4

FIG 5